(19)

Europäisches
Patentamt
European
Patent Office
Office européen
des brevets

(11)  **EP 2 077 649 A1**

(12)  **EUROPEAN PATENT APPLICATION**

(43) Date of publication:
**08.07.2009 Bulletin 2009/28**

(51) Int Cl.:
*H04L 27/26* [(2006.01)]     *H04L 25/02* [(2006.01)]

(21) Application number: **08100114.1**

(22) Date of filing: **04.01.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK**

(71) Applicant: **Ali Corporation
114, Taipei (TW)**

(72) Inventor: **Zhu, Zhi-Min
Shanghai (CN)**

(74) Representative: **2K Patentanwälte Blasberg
Kewitz & Reichel
Partnerschaft
Corneliusstraße 18
60325 Frankfurt am Main (DE)**

(54) **Channel estimation method and channel estimator utilizing the same**

(57)    A channel estimation method comprises following steps: Firstly, a plurality of symbols is received from a channel (step S9). Then, channel frequency responses on the pilot symbols are estimated (step S10). Next, linear interpolation is performed in time direction (step S11). Next, channel attribute of whether the channel is time invariant or time variant is determined according to the amplitudes of a series of continuous pilot symbols (step S12). Therefore, estimated channel frequency responses is passed into a filter when the channel is determined as time invariant (step S13), and finally, linear interpolation in frequency direction is performed to obtain a two dimensional channel frequency response in both time direction and frequency direction (step S14).

FIG. 7

**Description**

**BACKGROUND OF THE INVENTION**

**Field of the Invention**

The invention relates to channel estimation methods, and more particularly to OFDM channel estimation methods.

**Description of the Related Art**

Orthogonal Frequency Division Modulation (OFDM) is a digital multi-carrier modulation scheme, which uses a large number of closely spaced orthogonal sub-carriers to transmit signals to achieve spectrum efficiency. Each sub-carrier is modulated with a conventional modulation scheme (such as quadrature amplitude modulation, QAM) at a low symbol rate. In practice, OFDM signals are generated using Fast Fourier transform algorithm.

The primary advantage of OFDM is its ability to cope with severe channel conditions, for example, attenuation of high frequencies in long copper wires, narrowband interferences and frequency-selective fading due to multipath without complex equalization filters. Channel equalization is simplified because OFDM may be viewed as using many slowly-modulated narrowband signals rather than one rapidly-modulated wideband signal.

Channel estimation is an important part to further improve data transmission performance. There are two different types of channel estimators: decision-directed and pilot-symbol-aided. Decision-directed channel estimators have been used in OFDM systems for coherent detection, co-channel interference suppression and transmitter diversity. For systems that are noise limited or with little co-channel interference, coherent demodulation with estimated channel parameters can be used instead of differential demodulation, and can achieve a 2.5-3.0 dB signal-to-noise ratio (SNR) gain. Moreover, for systems with receiver diversity, maximal ratio diversity combining (MR-DC), which is equivalent to minimum mean-square error diversity combining (MMSE-DC) in the absence of co-channel interference, can be achieved directly using the estimated channel parameters. For systems with co-channel interference, the coefficients for the MMSE-DC can be calculated from the estimated channel parameters and the instantaneous correlation of the signals from each receiver. For OFDM systems with transmitter diversity using space-time codes, channel estimation can provide the necessary information required for the decoding of the space-time codes.

Pilot-symbol-aided channel estimation is another type of estimation approach. Pilot-symbol-aided channel estimation for single carrier systems with fading channels has been analyzed. Both 1-dimensional (1-D), double 1-D, and 2-dimensional (2-D) filtering algorithms have been proposed for pilot-symbol-aided channel estimation for OFDM systems in terrestrial audio and television broadcasting, fixed and mobile wireless communications. However, the filtering algorithms for pilot-symbol-aided channel estimation require channel statistics, such as, the delay profile and the Doppler frequency, which are usually unknown in wireless environments.

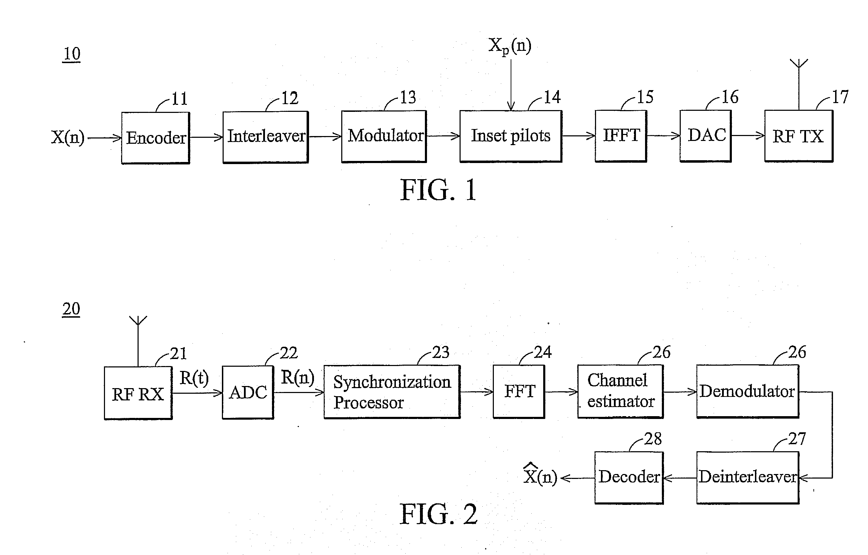

Fig. 1 illustrates a conventional OFDM transmitter 10 with pilot-symbol-aided channel estimation. In OFDM transmitter 10, data symbols $X(n)$ are firstly encoded by encoder 11. The encoded symbols are then scrambled by interleaver 12 to protect the transmission against burst errors. After being interleaved, the scrambled data symbols are passed into modulator 13 for constellation mapping, wherein the mapping scheme could be, for example, quadrature amplitude modulation (QAM). After constellation mapping, pilot symbols $Xp(n)$ are inserted into the modulated data symbols by interpolator 14. The pilot-aided symbols are then inverse fast Fourier transformed by IFFT 15 and then converted to analog signals by using digital analog converter DAC 16. The analog OFDM signals are finally broadcasted through radio frequency transmitter RF TX 17 and transmitted in the channel.

Fig. 2 illustrates a conventional OFDM receiver 20 corresponding to OFDM transmitter 10 shown in Fig. 1. In OFDM receiver 20, pilot-aided signal R(t) is received by radio frequency receiver RF RX 21, and then converted to digital symbols R(n) by using analog digital converter ADC 22. After conversion, timing recovery and frequency synchronization of digital symbols R(n) are performed by synchronization processor 23. After synchronization, the synchronized symbols are then Fourier transformed by FFT 24. The transformed symbols are passed into a channel estimator 25 to estimate the channel frequency response with the aid of the pilot symbols $X_p(n)$, wherein the pilot symbols $X_p(n)$ inserted in the OFDM transmitter 10 are also known in the OFDM receiver 20. The estimated channel frequency response can be used to compensate the effects of the fading channel and to recover the original transmitted symbols. After channel estimation, demodulator 26 de-maps the constellation mapped signal and deinterleaver 27 de-interleaves the scrambled symbols. Finally, the estimated transmitted symbols $\hat{X}(n)$ can be obtained after passing the descrambled symbols into the decoder 28.

## BRIEF SUMMARY OF THE INVENTION

Channel estimation method and channel estimator are provided. An exemplary embodiment of a channel estimation method comprises: receiving a plurality of symbols from a channel, wherein the received symbols are broadcasted through the channel and comprise a plurality of data symbols inserted with a plurality of pilot symbols and a series of continuous pilot symbols; estimating a plurality of channel frequency responses of the channel on the pilot symbols; performing linear interpolation in time direction to estimate a plurality of channel frequency responses of the channel on the data symbols according to the estimated channel frequency responses on the pilot symbols, to obtain a plurality of one dimensional channel frequency responses in time direction; determining whether the channel is time invariant or time variant according to the amplitudes of the series of continuous pilot symbols; passing the one dimensional channel frequency responses in time direction into a filter when the channel is determined as time invariant, to obtain a plurality of filtered one dimensional channel frequency responses in time direction; and performing linear interpolation in frequency direction according to the filtered one dimensional channel frequency responses in time direction, to obtain a two dimensional channel frequency response in both time direction and frequency direction.

An exemplary embodiment of channel estimator comprises a Least-Squares (LS) channel frequency response estimator, a first linear interpolator, a channel attribute estimator, a low pass filter, and a second linear interpolator. The LS channel frequency response estimator estimates a plurality of channel frequency responses of the channel on the pilot symbols. The first linear interpolator performs linear interpolation in time direction to estimate a plurality of channel frequency responses of the channel on the data symbols according to the estimated channel frequency responses on the pilot symbols, and obtains a plurality of one dimensional channel frequency responses in time direction. The channel attribute estimator estimates whether the channel is time invariant or time variant according to the amplitudes of the series of continuous pilot symbols. The low pass filter filters the one dimensional channel frequency responses in time direction when the channel is determined time invariant, and obtains a plurality of filtered one dimensional channel frequency responses in time direction. The second linear interpolator performs linear interpolation in frequency direction according to the filtered one dimensional channel frequency responses in time direction, and obtains a two dimensional channel frequency response in both time direction and frequency direction.

A detailed description is given in the following embodiments with reference to the accompanying drawings.

## BRIEF DESCRIPTION OF DRAWINGS

The invention can be more fully understood by reading the subsequent detailed description and examples with references made to the accompanying drawings, wherein:

Fig. 1 illustrates a conventional pilot-symbol-aided OFDM transmitter;

Fig. 2 illustrates a conventional OFDM receiver corresponding to OFDM transmitter shown in Fig. 1;

Fig. 3 illustrates an example of a pilot pattern in a digital video broadcasting terrestrial (DVB-T) system;

Fig. 4 illustrates a channel estimator used in an OFDM receiver according to an embodiment of the invention;

Fig. 5 illustrates the concept of the channel frequency response estimation in the time direction of some specific $k$-th sub-carrier;

Fig. 6a shows a flow chart according to the embodiment of the invention to illustrate the process adopted in channel attribute estimator for determining whether the channel is time variant or time invariant;

Fig. 6b shows the an example when implementing channel attribute estimation; and

Fig. 7 illustrates the flow chart of the channel estimation method according to the embodiment of the invention.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Firstly, the embodiments of the invention are operated in frequency domain, in other words, all data are sampled from frequency domain. In frequency domain, there are two dimensions, one is at frequency direction, and the other is at time direction. In an embodiment, frequency selective fading resulted from time domain multi-paths can be eliminated by the frequency response in one symbol at frequency direction, and time selective fading resulted from Doppler Shift can be coped with by the frequency response of several symbols at time direction. The embodiments of the invention will be fully discussed in the following.

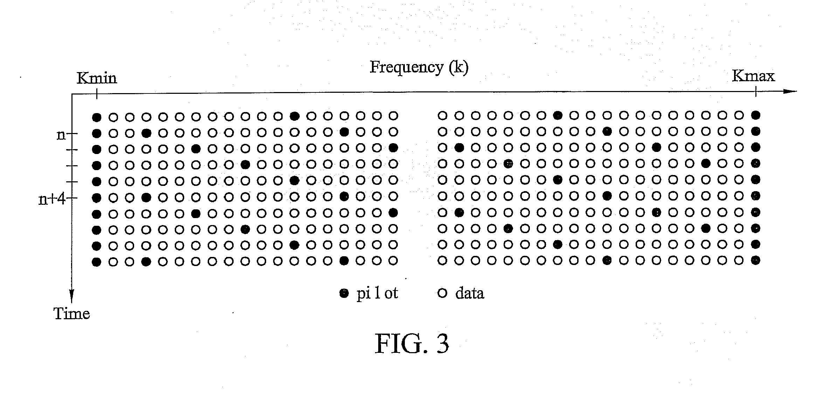

Fig. 3 illustrates an example of a pilot pattern in a digital video broadcasting terrestrial (DVB-T) system, wherein the hollow points represent the data symbols and the full points represent pilot symbols. The y-axis is the time axis, which shows the arrangement of the transmitted symbols in the time direction, and the x-axis is the frequency axis, which shows the symbols transmitted in each sub-carrier, wherein k is an index of active sub-carriers, $Kmin$=0 and *Kmax*=1704 active sub-carriers for OFDM 2K mode (2048 total sub-carriers with the other 343 sub-carriers padded with zero) or Kmax=6816 active sub-carriers for OFDM 8K mode (8192 total sub-carriers with the other 1375 sub-carriers padded with zero). Except the first and last columns, it can be seen from Fig. 3 that there is one pilot symbol inserted between every three data symbols in the time direction, and within every three sub-carriers in the frequency direction, there is one sub-carrier inserted with pilot symbols. Those inserted pilot symbols are important to use in the channel estimator of the OFDM receiver for estimating the channel frequency response (CFR).

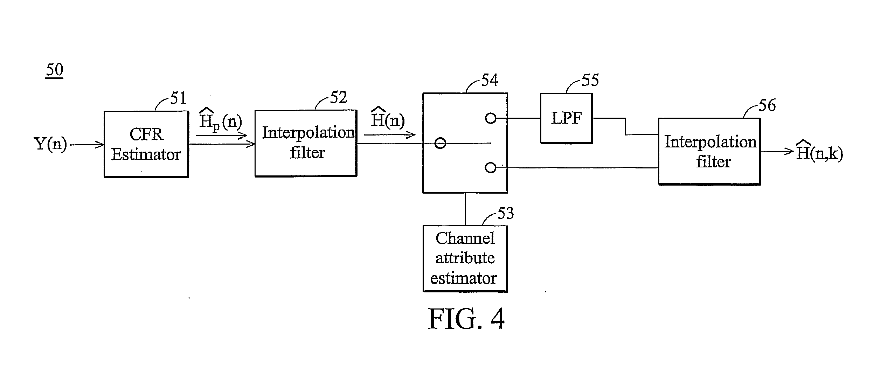

Fig. 4 illustrates a channel estimator 50 used in an OFDM receiver as shown in Fig. 2 according to an embodiment of the invention. The OFDM receiver as shown in Fig. 2 receives a plurality of OFDM symbols from a transmission channel, wherein the received OFDM symbols are broadcasted through the transmission channel and comprises a plurality of data symbols inserted with a plurality of pilot symbols and a series of continuous pilot symbols according to the OFDM transmission standard. As shown in Fig. 4, the channel estimator 50 comprises a LS channel frequency response estimator (LS CFR estimator) 51, two linear interpolators 52 and 56, a channel attribute estimator 53, a switch device 54, and a low pass filter LPF 55. The LS CFR estimator 51 receives a plurality of symbols *Y(n)* from the previous stage of the channel estimator 50 in an OFDM receiver, the previous stage of channel estimator 50 could be, for example, the FFT 24 shown in Fig. 2. The received symbols *Y(n)* are the results of the transmitted symbols *X(n)* in the OFDM transmitter that have been disturbed by the frequency response of the transmission channel. Since the transmitted pilot symbols $X_p(n)$ that are inserted in the transmitted symbols *X(n)* at the OFDM transmitter side are also known in the OFDM receiver side, CFR estimator 51 use the received pilot symbols $Y_p(n)$ to estimates a plurality of channel frequency responses of the channel on the pilot symbols according to the Least-Squares (LS) method:

$$Y_p(n) = H_p(n) \bullet X_p(n) \qquad \text{Eq. (1)}$$

where n represents the sample index in time direction, $X_p(n)$ represents pilot symbols inserted in the OFDM transmitter side, $H_p(n)$ represents the channel frequency response on the pilot symbols, $Y_p(n)$ represents received pilot symbols in the OFDM receiver side, and "•" represents the multiply function. Based on Eq. (1), the estimated channel frequency response on the pilot symbols $\hat{H}p(n)$ can be obtained.

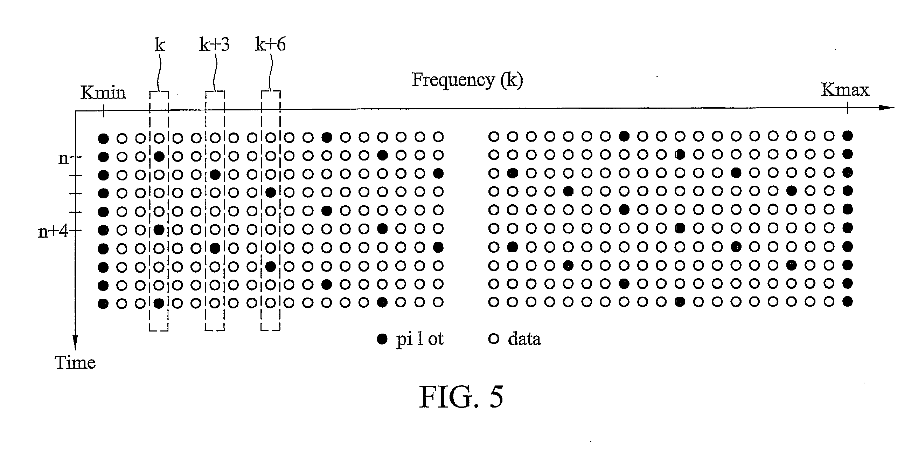

After obtaining the estimated channel frequency response on the pilot symbols $\hat{H}_p(n)$, the estimated channel frequency responses are feed into linear interpolator 52 shown in Fig. 4 to estimate the channel frequency responses on the data symbols for obtaining the complete channel frequency response in the time direction of some specific *k*-th sub-carrier. Fig. 5 illustrates the concept of the channel frequency response estimation in the time direction of some specific k-th sub-carrier. As shown in Fig, 5, sub-carriers *k, k*+3, k+6...are the sub-carriers inserted with pilot symbols. Take sub-carrier *k* as an example, the channel frequency responses on the three data symbols at time *n*+1, n+2, and n+3 of the *k*-th sub-carrier can be further estimated based on the obtained channel frequency responses on the pilot symbols at time *n* and n+4 of the *k*-th sub-carrier according to the following linearly interpolation formulas:

$$\hat{H}(n+1,k) = \frac{1}{4}[3\hat{H}_p(n,k) + \hat{H}_p(n+4,k)]; \qquad \text{Eq. (2)}$$

$$\hat{H}(n+2,k) = \frac{1}{4}[2\hat{H}_p(n,k) + 2\hat{H}_p(n+4,k)]; \qquad \text{Eq. (3)}$$

and

$$\hat{H}(n+3,k) = \frac{1}{4}[\hat{H}_p(n,k) + 3\hat{H}_p(n+4,k)]; \qquad \text{Eq. (4)}$$

where $\hat{H}_p(n,k)$ and $\hat{H}_p(n+4,k)$ are the estimated channel frequency response of sub-carrier $k$ on the pilot symbols at time $n$ and n+4, $\hat{H}(n+1,k)$, $\hat{H}(n+2,k)$ and $\hat{H}(n+3,k)$ are the channel frequency responses of sub-carrier $k$ on the three data symbols at time $n$+1, n+2, and n+3. Based on Eqs. (2)-(4), the interpolation process can be implemented in linear interpolator 52 as a 7-order linear interpolation filter with coefficients {1/4, 2/4, 3/4, 4/4, 3/4, 2/4, 1/4}. After applying the interpolation process to sub-carriers k, k+3, k+6...in linear interpolator 52, the one dimensional channel frequency responses in the time direction of the sub-carriers k, k+3, k+6... inserted with pilot symbols can thus be obtained.

In order to filter out the high frequency noise in the transmission channel and obtain better channel estimation results, the obtained one dimensional channel frequency responses in the time direction of the sub-carriers with pilot symbols can be further passed into a low pass filter before being interpolated in the frequency direction. Considering cost and performance, the low pass filter can be a one order infinite impulse response (IIR) filter expressed as:

$$q(n) = a * q(n-1) + b * p(n) \qquad \text{Eq. (5)}$$

where the parameters $a$ and $b$ are the parameters of the one order IIR filter and $a+b=1$, the parameter n is a sample index in time direction, $p(n)$ is an input sample at time n, and q(n) is an output sample of the IIR filter at time n. And the frequency response of the IIR filter is

$$H(z) = \frac{b}{1 - a * z^{-1}} \qquad \text{Eq. (6)}$$

and let $z=e^{jw}$, the frequency response of the IIR filter could be derived as:

$$H(e^{jw}) = \frac{b}{1 - a * e^{-jw}} = \frac{b}{1 - a * \cos(w) + j * a * \sin(w)} \qquad \text{Eq. (7)}$$

where the phase response of the IIR filter can be obtained as:

$$\psi(w) = -arctg\left(\frac{a * \sin(w)}{1 - a * \cos(w)}\right) \qquad \text{Eq. (8)}$$

and the slope of phase response $\psi(w)$ can be further obtained as:

$$s(w) = \frac{d(\psi(w))}{d(w)} = a * \frac{a - \cos(w)}{(1 - a * \cos(w))^2 + (\sin(w))^2} \qquad \text{Eq. (9)}$$

It can be seen from Eq. (9) that when frequency $w \to 0$, $\psi(w)$ can be approached as:

$$\psi(w) = s(w) * w = \frac{a}{a-1} * w \qquad\qquad \text{Eq. (10)}$$

Thus, when frequency $w \to 0$, $\psi(w)$ can approximate linear, which means that when frequency $w \to 0$, the IIR filter can approximate linear. However, because the IIR filter still has group delay as:

$$G = \frac{a}{1-a}, 0 < a < 1 \qquad\qquad \text{Eq. (11)}$$

which implies that the IIR filter is only preferably applied when the channel is determined time invariant because the effect of group delay is small for a time invariant channel.

From the above discussion, it can be seen that an channel attribute estimator 53 is required in the channel estimator 50 to determine whether the channel is time variant or time invariant before passing the obtained one dimensional channel frequency responses in the time direction of the sub-carriers with pilot symbols into the IIR filter expressed in Eq. (5).

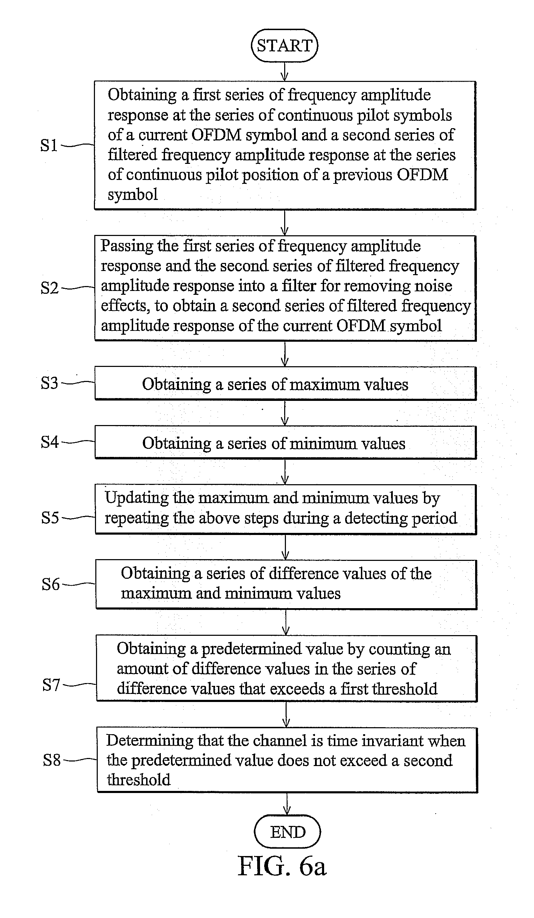

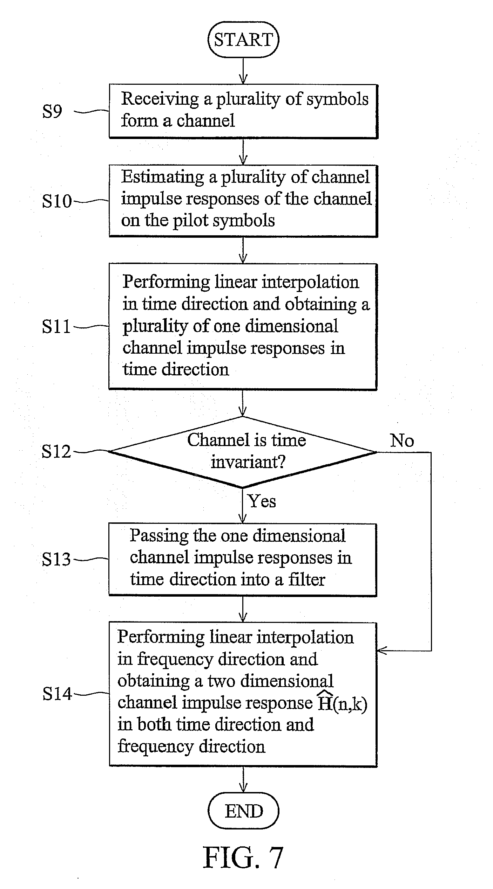

In the time variant channel, all pilots will be affected by time fading characteristic. So, we can estimate the channel attribute by the amplitude fluctuation of pilots. Fig. 6a shows a flow chart according to the embodiment of the invention to illustrate the process adopted in channel attribute estimator 53 for determining whether the channel is time variant or time invariant (steps S1-S8 are substeps of step S12 in Fig. 7). Firstly, according to LS principle, the channel attribute estimator 53 obtains a first series of frequency amplitude response at the series of continuous pilot symbols of a current OFDM symbol and a second series of filtered frequency amplitude response at the series of continuous pilot position of a previous OFDM symbol (S1). In one embodiment of the invention, the series of continuous pilot symbols can be the 177 pilot symbols for 8k mode or 45 pilot symbols for 2k mode. Next, the channel attribute estimator 53 passes the first series of frequency amplitude response and the second series of filtered frequency amplitude response into a filter for removing noise effects, to obtain a third series of filtered frequency amplitude response of the current OFDM symbol (S2). According to one embodiment, the IIR filter discussed above in Eq. (5) can be also adopted here for filtering out the white noise. Next, the channel attribute estimator 53 obtains a series of maximum values (S3) and a series of minimum values (S4) through comparing the third series of filtered frequency amplitude response and the two previous series of maximum and minimum values. Next, the channel attribute estimator 53 updates the maximum and minimum values by repeating the above steps during a detecting period (S5). Next, the channel attribute estimator 53 stops updating maximum and minimum values and obtains a series of difference values of the maximum and minimum values (S6). Next, the channel attribute estimator 53 obtains a predetermined value by counting an amount of difference values in the series of difference values that exceeds the first threshold (S7). This threshold is decided by simulation, we set it 200 which is about half of the full 10 bits sign data. Next, the channel attribute estimator 53 determines that the channel is time invariant when the predetermined value does not exceed the second threshold, and determines that the channel is time variant when the predetermined value exceeds the second threshold (S8). This threshold is set 20 for 2k mode or 80 for 8k mode which is also decided by simulation and FPGA (field programmable gate array) test. Finally, the channel attribute estimator 53 repeats all the above steps to detect channel attribute at any moment.

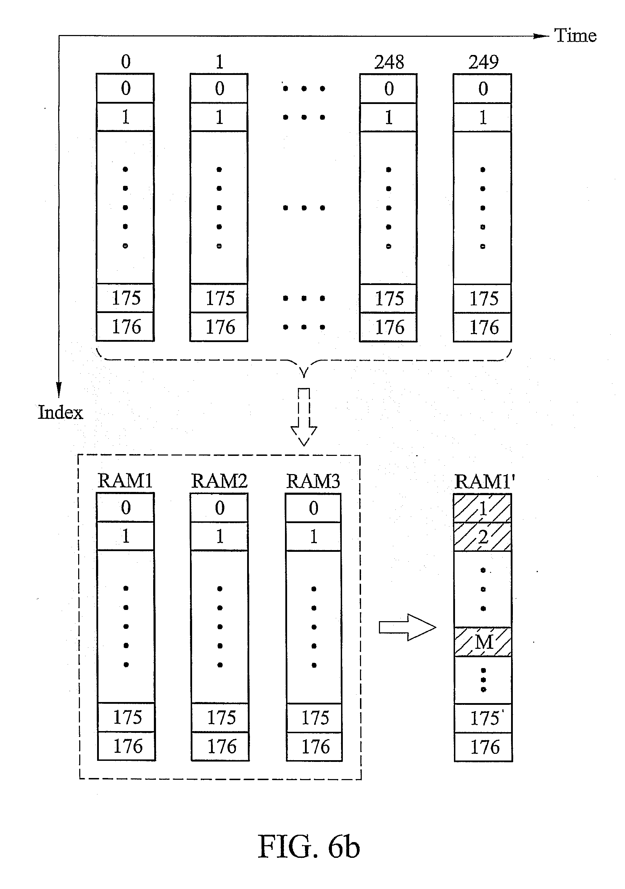

When implementing in practical, the channel attribute estimator 53 can simply use a few of random access memories (RAM) to implement the above steps. Fig. 6b shows an example when implementing channel attribute estimation. As shown in Fig. 6b, there are 250 series of continuous pilot symbols in the time direction, and each of them contains 177 continuous pilot symbols (as shown along the index direction). Take the $0^{th}$ and $1^{st}$ series of continuous pilot symbols as an example, channel attribute estimator 53 stores the 177 frequency amplitude response values at the series of continuous pilot symbols obtained in a previously received $0^{th}$ OFDM symbol in three 177x1 RAMs: RAM1, RAM2, and RAM3. Then the 177 frequency amplitude response values at the series of continuous pilot symbols in the current $1^{st}$ OFDM symbol are filtered by an IIR filter and the filtered results of each value can be rewritten into the corresponding index in RAM1. Next, channel attribute estimator 53 compares the values stored in the same index of RAM1 and RAM2, and stores the larger one in the corresponding index of RAM2. And channel attribute estimator 53 also compares the values stored in the same index of RAM1 and RAM3, and stores the smaller one in the corresponding index of RAM3. The values in RAM2 and RAM3 must be updated in every OFDM symbol by repeating the above steps during the detection period. Next, channel attribute estimator 53 stops updating RAM1, RAM2 and RAM3 and subtracts each value stored in RAM2 from the value stored in the same index in RAM3, and stores the each obtained difference back to same index in the RAM1 respectively (shown as the RAM1' in Fig. 6b, wherein RAM1' is the updated RAM1 with obtained difference). Next, channel attribute estimator 53 obtains a predetermined value M by counting the amount of differences stored in RAM1 that exceeds a first threshold (shown as the RAM1' in Fig. 6b, wherein the index filled with slash represents that the difference stored in the corresponding index of RAM1' exceeds a first threshold ). Finally, channel attribute estimator 53 determines that the channel is time invariant when the predetermined value M does not exceed a second threshold. The channel attribute estimator 53 repeats all the above steps to determine whether the channel is time variant or not at any moment.

According to one embodiment of the present invention, the channel attribute can be precisely estimated based on the received symbols during this observation period. In one embodiment, the observation period is selected as 250ms when assuming the maximum frequency deviation $f_{dmax}$ of a time invariant channel equals to 1Hz. However, in another embodiment of the invention, the channel attribute estimator 53 can also select another frequency deviation value $f_{dmax}$ and set the observation period as $\dfrac{1}{4 \times f_{d\max}}$. And the channel attribute estimator 53 can also update the channel attributes by repeating the above steps at any another time.

After channel attribute estimator 53 determines whether the channel is time variant or time invariant, the result is used to control the switch device 54 as shown in Fig. 4. When the channel is determined time invariant, switch device 54 will couple the interpolation filter 52 to the LPF 55 in order to pass the one dimensional channel frequency responses $\hat{H}(n)$ obtained in interpolation filter 52 to the LPF 55, wherein the LPF 55 can be implemented as the IIR filter expressed in Eq. (5) for filtering out the high frequency noise. When the channel is determined time variant, switch device 54 will couple the interpolation filter 52 directly to the interpolation filter 56 without passing the obtained one dimensional channel frequency responses $\hat{H}(n)$ into LPF 55 because the IIR filter is only preferably applied when the channel is determined time invariant as described above.

Finally, the interpolation filter 56 performs linear interpolation in frequency direction according to the received one dimensional channel frequency responses in time direction, and obtains a two dimensional channel frequency response in both time direction and frequency direction. The interpolation filter is a 95 orders low pass filter. Thus, a two dimensional channel frequency response $\hat{H}(n,k)$ for each $k$-th sub-carrier in frequency direction and at each time n in time direction is obtained by using interpolation filter 54.

Fig. 7 illustrates the flow chart of the channel estimation method according to the embodiment of the invention. Firstly, a plurality of OFDM symbols are received from a channel, wherein the received OFDM symbols are broadcasted through the channel and comprise a plurality of data symbols inserted with a plurality of pilot symbols and a series of continuous pilot symbols (S9). Next, a plurality of channel frequency responses of the channel on the pilot symbols are estimated (S10). Next, linear interpolation in time direction is performed to estimate a plurality of channel frequency responses of the channel on the data symbols according to the estimated channel frequency responses on the pilot symbols, to obtain a plurality of one dimensional channel frequency responses in time direction (S11). Next, channel attribute of whether the channel is time invariant or time variant is determined according to the amplitudes of the series of continuous pilot symbols (S12). Next, the one dimensional channel frequency responses in time direction is passed into a filter when the channel is determined as time invariant, to obtain a plurality of filtered one dimensional channel frequency responses in time direction (S13). Finally, linear interpolation in frequency direction is performed according to the filtered one dimensional channel frequency responses in time direction, to obtain a two dimensional channel frequency response in both time direction and frequency direction (S14). It should be noted that when the channel is determined as time variant, it is preferable to perform linear interpolation in frequency direction using the one dimensional channel frequency responses in time direction directly, to obtain the two dimensional channel frequency response in both time direction and frequency direction.

With the process of determining whether the channel is time invariant or not, the proposed channel estimation method can achieve better performance by applying the IIR filter before linear interpolation in the frequency direction when the channel is time invariant. It is especially preferably in long echo channel, and the parameter $a$ of IIR filter expressed in Eq. (5) is preferably chosen as 0.75 and the parameter b is preferably chosen as 0.25 for achieving the desired balance between cost and performance.

In summary a channel estimation method is proposed comprising the following steps (see Fig. 7): Firstly, a plurality of symbols is received from a channel (step S9). Then, channel frequency responses on the pilot symbols are estimated (step S10). Next, linear interpolation is performed in time direction (step S11). Next, channel attribute of whether the channel is time invariant or time variant is determined according to the amplitudes of a series of continuous pilot symbols (step S12). Therefore, estimated channel frequency responses is passed into a filter when the channel is determined as time invariant (step S13), and finally, linear interpolation in frequency direction is performed to obtain a two dimensional channel frequency response in both time direction and frequency direction (step S14).

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents

**Claims**

1. A channel estimation method, comprising:

   receiving a plurality of OFDM symbols from a channel, wherein the received OFDM symbols are broadcasted through the channel and comprise a plurality of data symbols inserted with a plurality of pilot symbols and a series of continuous pilot symbols (step S9);
   estimating a plurality of channel frequency responses of the channel on the pilot symbols (step S10);
   performing linear interpolation in time direction to estimate a plurality of channel frequency responses of the channel on the data symbols according to the estimated channel frequency responses on the pilot symbols, to obtain a plurality of one dimensional channel frequency responses in time direction (step S11);
   determining whether the channel is time invariant or time variant according to the amplitudes of the series of continuous pilot symbols (step S12);
   passing the one dimensional channel frequency responses in time direction into a filter when the channel is determined as time invariant, to obtain a plurality of filtered one dimensional channel frequency responses in time direction (step S13); and
   performing linear interpolation in frequency direction according to the filtered one dimensional channel frequency responses in time direction, to obtain a two dimensional channel frequency response in both time direction and frequency direction (step S14).

2. The channel estimation method as claimed in claim 1, wherein the steps of determining whether the channel is time invariant or not further comprises:

   obtaining a first series of frequency amplitude response at the series of continuous pilot symbols of a current OFDM symbol and a second series of filtered frequency amplitude response at the series of continuous pilot symbols of a previous OFDM symbol (step S1);
   passing the first series of frequency amplitude response and the second series of filtered frequency amplitude response into the filter for removing noise effects, to obtain a third series of filtered frequency amplitude response at the series of continuous pilot symbols of the current OFDM symbol (step S2);
   obtaining a series of maximum values and a series of minimum values by comparing the third series of filtered frequency amplitude response with the two previous series of maximum and minimum values (steps S3, S4);
   repeating the above steps during a detection period to update the series of maximum and minimum values (step S5);
   obtaining a series of difference values of the series of maximum and the series of minimum values (step S7);
   obtaining a predetermined value by counting an amount of difference values in the series of difference values that exceeds a first threshold (step S7);
   determining that the channel is time invariant when the predetermined value does not exceed a second threshold (step S8); and
   repeating all the above steps to detect channel attribute at any moment.

3. The channel estimation method as claimed in claim 1, wherein the series of continuous pilot symbols contain 177 pilot symbols for a 8k mode OFDM frame or 45 pilot symbols for a 2k mode OFDM frame transmitted for performing timing recovery and frequency synchronization.

4. The channel estimation method as claimed in claim 2, wherein the period is 250ms.

5. The channel estimation method as claimed in claim 2, further comprising selecting a frequency deviation value $f_{dmax}$ for representing a maximum frequency deviation when the channel is regarded as time invariant, and setting the period as $\dfrac{1}{4 \times f_{d\max}}$ .

**6.** The channel estimation method as claimed in claim 1, wherein the filter is a low pass filter.

**7.** The channel estimation method as claimed in claim 1, wherein the filter is a one order infinite impulse response low pass filter expressed as:

$$q(n) = a * q(n-1) + b * p(n)$$

where the parameters *a* and b are the parameters of the one order infinite impulse response low pass filter, the parameter n is a sample index in time direction, *p(n)* is an input sample at time n, and *q(n)* is an output sample outputted from the one order infinite impulse response low pass filter at time n.

**8.** The channel estimation method as claimed in claim 7, wherein the parameter a is 0.75, and b is 0.25.

**9.** The channel estimation method as claimed in claim 1, further comprising:

performing linear interpolation in frequency direction using the one dimensional channel frequency responses in time direction directly, to obtain the two dimensional channel frequency response in both time direction and frequency direction when the channel is determined as time variant.

**10.** A channel estimator (50) in an OFDM receiver receiving a plurality of OFDM symbols from a channel, wherein the received OFDM symbols are broadcasted through the channel and comprises a plurality of data symbols inserted with a plurality of pilot symbols and a series of continuous pilot symbols, and the channel estimator (50) comprising:

a channel frequency response estimator (51) for estimating a plurality of channel frequency responses of the channel on the pilot symbols;
a first linear interpolator (52) for performing linear interpolation in time direction to estimate a plurality of channel frequency responses of the channel on the data symbols according to the estimated channel frequency responses on the pilot symbols, and obtaining a plurality of one dimensional channel frequency responses in time direction;
a channel attribute estimator (53) for estimating whether the channel is time invariant or time variant according to the amplitudes of the series of continuous pilot symbols;
a filter (55) for filtering the one dimensional channel frequency responses in time direction when the channel is determined time invariant, and obtaining a plurality of filtered one dimensional channel frequency responses in time direction; and
a second linear interpolator (56) for performing linear interpolation in frequency direction according to the filtered one dimensional channel frequency responses in time direction, and obtaining a two dimensional channel frequency response in both time direction and frequency direction.

**11.** The channel estimator (50) as claimed in claim 10, wherein the channel attribute estimator (53) estimates whether the channel is time invariant or time variant by:

obtaining a first series of frequency amplitude response at the series of continuous pilot symbols of a current OFDM symbol and a second series of filtered frequency amplitude response at the series of continuous pilot symbols of a previous OFDM symbol;
passing the first series of frequency amplitude response and the second series of filtered frequency amplitude response into the filter for removing noise effects, to obtain a third series of filtered frequency amplitude response at the series of continuous pilot symbols of the current OFDM symbol;
obtaining a series of maximum values and a series of minimum values by comparing the third series of filtered frequency amplitude response with the two previous series of maximum and minimum values;
repeating the above steps during a detection period to update the series of maximum and minimum values;
obtaining a series of difference values of the two series of maximum and the series of minimum values;
obtaining a predetermined value by counting an amount of difference values in the series of difference values that exceeds a first threshold;
determining that the channel is time invariant when the predetermined value does not exceed a second threshold; and
repeating all the above steps to detect channel attribute at any moment.

**12.** The channel estimator (50) as claimed in claim 11, wherein the series of continuous pilot symbols contain 177 pilot symbols for a 8k mode OFDM frame or 45 pilot symbols for a 2k mode OFDM frame transmitted for performing timing recovery and frequency synchronization.

**13.** The channel estimator (50) as claimed in claim 11, wherein the period is 250ms.

**14.** The channel estimator (50) as claimed in claim 11, wherein the channel attribute estimator (53) further selects a frequency deviation value $f_{dmax}$ for representing a maximum frequency deviation when the channel is regarded as time invariant, and sets the period as $\dfrac{1}{4 \times f_{d\max}}$ .

**15.** The channel estimator (50) as claimed in claim 11, wherein the filter (55) is a low pass filter.

**16.** The channel estimator (50) as claimed in claim 11, wherein the filter (55) is a one order infinite impulse response low pass filter expressed as:

$$q(n) = a * q(n-1) + b * p(n)$$

where the parameters $a$ and b are the parameters of the one order infinite impulse response low pass filter, the parameter n is a sample index in time direction, $p(n)$ is an input sample at time n, and q(n) is an output sample outputted from the one order infinite impulse response low pass filter at time n.

**17.** The channel estimator (50) as claimed in claim 16, wherein the parameter $a$ is 0.75.

**18.** The channel estimator (50) as claimed in claim 10, wherein the second linear interpolator (56) performs linear interpolation in frequency direction according to the one dimensional channel frequency responses in time direction directly, and obtains the two dimensional channel frequency response in both time direction and frequency direction when the channel is determined as time variant.

EP 2 077 649 A1

$X_p(n)$

10

| X(n) → | Encoder | → | Interleaver | → | Modulator | → | Inset pilots | → | IFFT | → | DAC | → | RF TX |
|---|---|---|---|---|---|---|---|---|---|---|---|---|
| | 11 | | 12 | | 13 | | 14 | | 15 | | 16 | 17 |

## FIG. 1

20

| RF RX | → R(t) → | ADC | → R(n) → | Synchronization Processor | → | FFT | → | Channel estimator | → | Demodulator |
|---|---|---|---|---|---|---|---|---|---|---|
| 21 | | 22 | | 23 | | 24 | | 26 | | 26 |

$\widehat{X}(n)$ ← | Decoder | ← | Deinterleaver | ←

28        27

## FIG. 2

FIG. 3

FIG. 4

FIG. 5

EP 2 077 649 A1

START

S1 — Obtaining a first series of frequency amplitude response at the series of continuous pilot symbols of a current OFDM symbol and a second series of filtered frequency amplitude response at the series of continuous pilot position of a previous OFDM symbol

S2 — Passing the first series of frequency amplitude response and the second series of filtered frequency amplitude response into a filter for removing noise effects, to obtain a second series of filtered frequency amplitude response of the current OFDM symbol

S3 — Obtaining a series of maximum values

S4 — Obtaining a series of minimum values

S5 — Updating the maximum and minimum values by repeating the above steps during a detecting period

S6 — Obtaining a series of difference values of the maximum and minimum values

S7 — Obtaining a predetermined value by counting an amount of difference values in the series of difference values that exceeds a first threshold

S8 — Determining that the channel is time invariant when the predetermined value does not exceed a second threshold

END

## FIG. 6a

FIG. 6b

START

S9 — Receiving a plurality of symbols form a channel

S10 — Estimating a plurality of channel impulse responses of the channel on the pilot symbols

S11 — Performing linear interpolation in time direction and obtaining a plurality of one dimensional channel impulse responses in time direction

S12 — Channel is time invariant?

No

Yes

S13 — Passing the one dimensional channel impulse responses in time direction into a filter

S14 — Performing linear interpolation in frequency direction and obtaining a two dimensional channel impulse response $\widehat{H}(n,k)$ in both time direction and frequency direction

END

FIG. 7

**European Patent Office**

**EUROPEAN SEARCH REPORT**

Application Number

EP 08 10 0114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 1 580 951 A (SONY UK LTD [GB]) 28 September 2005 (2005-09-28) * paragraphs [0020], [0025] - [0028], [0033], [0044], [0045], [0049]; claim 1; figures 4,5 * | 1,3, 6-10,18<br>2,4,5, 11-17 | INV.<br>H04L27/26<br>H04L25/02 |
| A | ----- <br>US 2007/242761 A1 (YANG SHUN-AN [TW]) 18 October 2007 (2007-10-18) * paragraphs [0002], [0018], [0019]; figures 1,2 * | 1-18 | |
| | ----- | | |

**TECHNICAL FIELDS SEARCHED (IPC)**

H04L

The present search report has been drawn up for all claims

| Place of search | Date of completion of the search | Examiner |
|---|---|---|
| Berlin | 10 June 2008 | Fouasnon, Olivier |

EPO FORM 1503 03.82 (P04C01)

**EP 2 077 649 A1**

## ANNEX TO THE EUROPEAN SEARCH REPORT
## ON EUROPEAN PATENT APPLICATION NO.

EP 08 10 0114

10-06-2008

| Patent document cited in search report | | Publication date | Patent family member(s) | | Publication date |
|---|---|---|---|---|---|
| EP 1580951 | A | 28-09-2005 | GB | 2412551 A | 28-09-2005 |
| | | | JP | 2005312027 A | 04-11-2005 |
| | | | US | 2005213680 A1 | 29-09-2005 |
| US 2007242761 | A1 | 18-10-2007 | CN | 101060514 A | 24-10-2007 |

EPO FORM P0459